Europäisches Patentamt

European Patent Office

Office européen des brevets

(19)

(11) EP 0 385 717 B1

(12) EUROPEAN PATENT SPECIFICATION

(45) Date of publication and mention
of the grant of the patent:
**11.06.1997 Bulletin 1997/24**

(51) Int Cl.6: **G06K 9/46**, G07C 9/00

(21) Application number: **90302064.2**

(22) Date of filing: **27.02.1990**

(54) **Pattern image processing apparatus**

Musterbildverarbeitungssystem

Appareil de traitement d'images de modèles

(84) Designated Contracting States:
**FR GB IT**

(30) Priority: **28.02.1989 JP 47132/89**

(43) Date of publication of application:
**05.09.1990 Bulletin 1990/36**

(73) Proprietor: **KABUSHIKI KAISHA TOSHIBA**
**Kawasaki-shi, Kanagawa-ken 210 (JP)**

(72) Inventors:
• **Uchida, Satoshi, c/o Intellectual Property Div.**
**Minato-ku, Tokyo (JP)**
• **Takeda, Masahiro, c/o Intellectual Property Div.**
**Minato-ku, Tokyo (JP)**

(74) Representative: **BATCHELLOR, KIRK & CO.**
**2 Pear Tree Court**
**Farringdon Road**
**London EC1R 0DS (GB)**

(56) References cited:
**EP-A- 0 173 972**       **EP-A- 0 347 671**
**GB-A- 1 480 066**       **US-A- 4 329 574**

• **PATENT ABSTRACTS OF JAPAN vol. 11, no. 134**
**(P-571)28 April 1987**
• **PATENT ABSTRACTS OF JAPAN vol. 10, no. 254**
**(P-492)30 August 1986**

## Description

The present invention relates to a pattern image processing apparatus capable of use in an entrance/exit monitoring apparatus for monitoring people who enter or exit from a predetermined room or other structure. More particularly, the invention relates to a pattern image processing apparatus for generating image data corresponding to a finger of such a person as read by a reader of the monitoring apparatus and comparing same with image data corresponding to finger image patterns stored in advance in a memory device to verify or identify a person.

Conventionally, a person who enters or exits from a predetermined room or location using a typical identification card system enters an identification number which is known only to himself. However, when an identification card is used, a person may lose the card or the card may be stolen, and it is difficult to guarantee the safety of the card. When an identification number is used, a person may forget the identification number or the number may be illegally used. For this reason, it is difficult to safely and reliably identify a person in this manner.

Recently, various identification and verification methods for identifying or verifying a person utilizing personal physical features have been developed. For example in "Fingerprint Identification for Personal Verification", I ECEJ Technical Report pp. 97-104, Morita et al discloses a fingerprint identification system by comparing data of a fingerprint input by a TV camera with a plurality of data characteristic of registered fingerprints of authorized individuals.

According to the above system, the correctness of a fingerprint identification depends on how correctly image data of the fingerprint is input. Such a system inputs the image data when densities of a predetermined number of image cells selected from whole image cells are larger than a threshold.

The image density of the image cell, however, is not basically related to the quality of the image data. If the quality of the image data is poor, the above system cannot identify correctly the input fingerprint with the registered fingerprints.

EP-A-0 347 671, falling under Article 54(3) EPC, represents the closest prior art, shows an arrangement for collating image data with previously stored data to identify a fingerprint. However, there is a problem with this system that - since only one collection of data is made - the image may not be accurately detected, leading to errors.

According it is an object of the present invention to provide a pattern image processing system which can correctly identify input fingerprint data based on registered fingerprint data.

Accordingly the present invention provides an image processing apparatus for fingerprint identification comprising

means for reading a fingerprint and generating a first set of pattern data identifying the fingerprint; means for transforming the first set of pattern data generated by the generating means into a smaller, transformed first set of data to represent the characteristics of the fingerprint; storage means for storing a reference set of data corresponding to a reference fingerprint; means adapted for collating the set of reference fingerprint data with the smaller, transformed first set of data to determine whether they match; and

said apparatus further comprising

means adapted for successively repeating the reading of the fingerprint, and generating corresponding successive sets of pattern data; transforming each successive set of data into a smaller, transformed set, and collating each transformed set of data with the reference data; and means for generating a coincidence signal in the event of a match between at least two successive transformed sets and the reference set.

The invention also extends to a method for fingerprint identification, comprising the steps of

repeatedly reading a fingerprint and generating corresponding successive sets of pattern data identifying the fingerprint; transforming each set of pattern data into a smaller, transformed set of data to represent the characteristics of the fingerprint; collating each transformed set of data with a stored set of reference data to determine whether they match; and generating a coincidence signal in the event of a match between at least two successive sets of transformed data, and the reference data.

Specifically, the collating means outputs a non-coincidence signal indicating that the date generated by the generating means is different from the registered data only after generation of data is repeated and collated with the register data a plurality of times.

In accordance with another aspect of the present invention, the above-stated objects are achieved by providing a pattern image in accordance with the above. The collating means, however, outputs a signal indicating that the data generated by generating means corresponds with the registered data only after repeated generation of coincidental data and continuous identification of such based on collation with registered data. The number of repetitions of data generation and collation in outputting a coincidence signal is less than that for outputting a non-coincidence signal.

Other objects and many of the attendant advantages of the present invention will be readily appreciated as the invention becomes better understood by reference to the following detailed description when considered in connection with the accompanying drawings, in which like reference characters designate the same or similar parts through the figures thereof and wherein:

Figure 1 is a block diagram showing an embodiment of the present invention;
Figure 2 is a flow chart for illustrating a registration operation of a finger image in the apparatus shown in Figure 1;
Figure 3a is an illustration of a finger image sensed by a camera used in the apparatus shown in Figure 1;
Figure 3b depicts an electrical signal corresponding to the finger image shown in Figure 3a;
Figure 4 is a flow chart illustrating a monitoring operation for an entrance and exit from a structure using the apparatus shown in Figure 1;
Figure 5a is an illustration of a finger image sensed by a camera;
Figure 5b depicts an electrical signal corresponding to the finger image shown in Figure 5a;
Figure 6 is a flow chart showing in detail a collation operation of the finger image shown in Figure 4 with a registered finger image; and
Figure 7 is a block diagram showing a portion of another embodiment of the present invention.

## DETAILED DESCRIPTION OF THE PREFERRED EMBODIMENTS

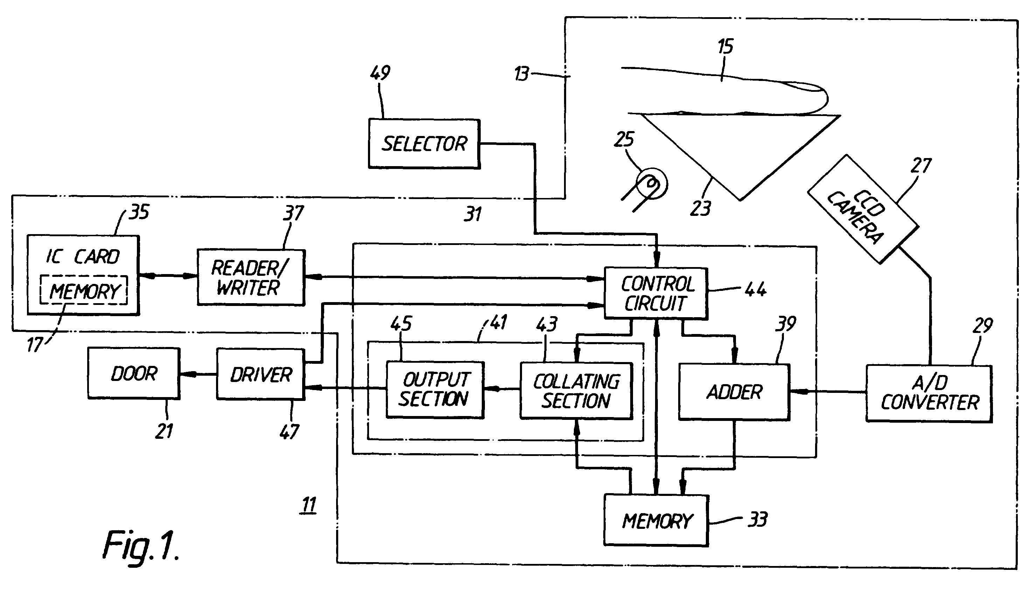

Referring now to Figure 1, there is disclosed a monitoring apparatus 11 for identifying a person based on registered data which uses a pattern image processing apparatus, such as fingerprint identification apparatus 13. Finger print identification apparatus 13 checks whether or not a characteristic of a finger print of a finger 15 coincides with a reference registered finger print in memory 17. Finger print identification apparatus 13 outputs a result signal indicating a coincidence or non-coincidence thereof. In response to the result signal, a driver 47 automatically opens/closes door 21.

For example, if a person wants to open door 21, he places his finger in contact with a surface of a glass element, such as a prism 23 as shown in Figure 1. A light source 25 illuminates finger 15 through a side surface of prism 23. A generating device, such as CCD camera 27 operatively positioned with respect to prism 23 receives light reflected by finger 15 through another side of prism 23. CCD camera 27 generates signals in accordance with light received. The signals generates by CCD camera 27 correspond to an image of a portion of finger 15, preferably including at least first and second joints of finger 15.

A/D converter 29 receives the signals generated by CCD camera 27 and converts the received signals into digital signals, e.g., 8-bit digital signals. The digital signals in accordance with an image of finger 15 consists of a plurality of pixels, e.g., 512 x 512 pixels (rows and columns).

Controller 31 receives the digital signals generated by A/D converter 29. In response to the signals received and a reference signal stored in memory 17, controller 31 checks whether or not both signals coincide with each other in accordance with a program stored in program memory 33.

An IC card 35 including memory 17 within a body thereof serves as a portable storage medium. When a card holder wants to open door 21, the card holder inserts IC card 35 into a reader/writer 37 to allow a reading/writing operation on IC card 35. Reader/writer 37 is coupled to controller 31 and serves as a coupler between controller 31 and IC card 35.

Controller 31 includes an adder 39 for adding the signals generated by A/D converter 29 column by column. A sum signal generated by adder 39 is temporarily stored in program memory 33.

Comparator 41, comprising collating section 43 and output section 45, compares the signals stored in program memory 33 with reference signals read out from memory 17 through reader/writer 37 and control circuit 46. Control circuit 46 controls the apparatus in accordance with the program stored in program memory 33.

Comparator 41 includes collating section 43 for collating the signals read out from memory 17 with the signals supplied from reader/writer 37 through control circuit 46. The collating section outputs a collation result indicating a coincidence/non-coincidence between the two signals. The collation result is supplied to the output section 45.

When output section 45 receives the collation result indicating a coincidence from collating section 43, output section 45 supplies a drive instruction to a driver 47. The driver 47 opens/closes door 21 in accordance with the drive instruction from output section 45.

With the above arrangement, monitoring apparatus 11 has two operation modes selected by a selector 49. Selector 49 sets monitoring apparatus 11 in an input mode in response to an operation of switch (not shown) by an operator. Usually, selector 49 sets monitoring apparatus 11 in an collation mode. In the input mode, only fingerprint identification apparatus 13 is activated so that an IC card holder inputs characteristic signals of the card holder's finger in memory 17. In the collation mode, the entire monitoring apparatus is activated so that feature signals of a finger are collated.

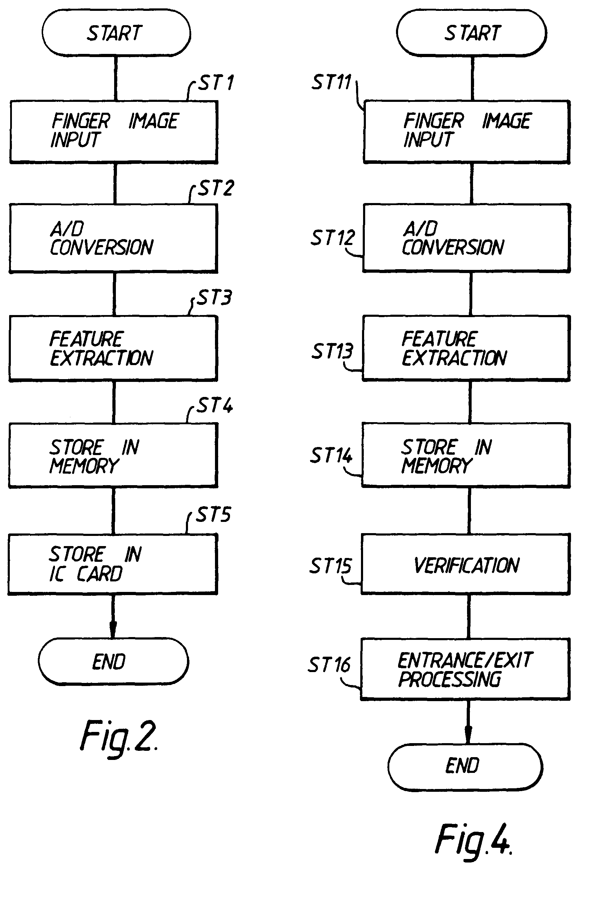

Referring now to Figure 2, the operation of the registration or input mode will be described below with reference to Figure 2.

In the input mode, the operator operates the switch so that selector 49 sends to control circuit 46 a signal indicating the input mode. At first, control circuit 46 performs a preparatory operation. For example, control circuit 46 checks whether IC card 35 is inserted into reader/writer 37 and checks whether IC card 35 Is authorized, e.g., checks a personal identification number stored in IC card 35.

After the preparatory operation, control circuit 46 performs the following operation. When finger 15 is brought into contact with the surface of prism 23, finger 15 is irradiated with light emitted from light source 25. The light emitted from the light source 12 is reflected or scattered by the surface of finger 15. A monochromatic finger image of a fingerprint and joints is produced. The finger image is sensed by camera 27. Image signals generated by camera 27 are converted into digital signals (8 bits/pixel) (steps ST1 and ST2). The digital finger-image signals consisting of, e.g., 512 x 512 pixels (rows and columns), output from A/D converter 29 are supplied to the controller 31 column by column.

Feature signals are extracted from the digital finger-image signals (step ST3). Adder 39 adds the digital finger image signals to generate the feature signals.

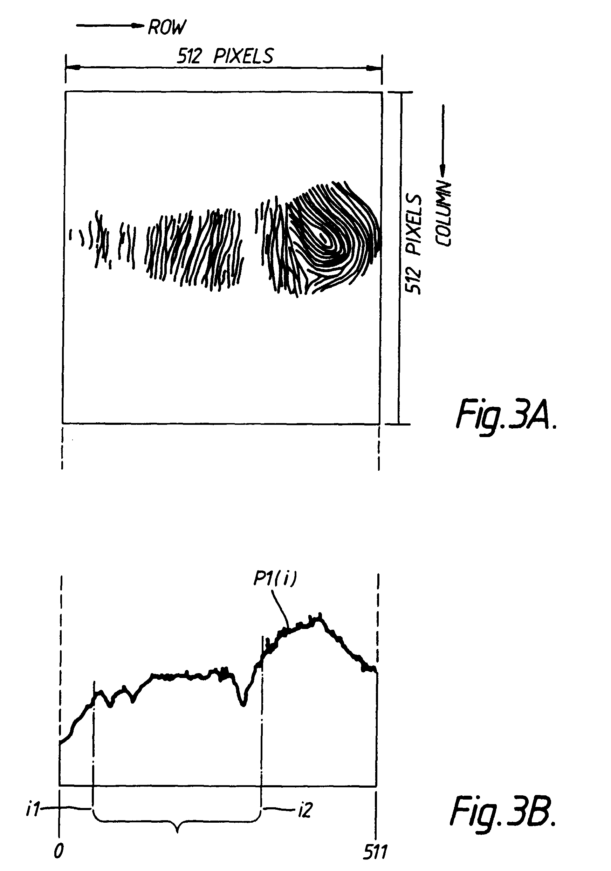

More specifically, assuming that the finger image generated by camera 27 is as shown in Figure 3a, 8-bit digital signals corresponding to 512 pixels in a direction perpendicular to the longitudinal direction of the finger image are supplied to and added by adder 39. The addition by adder 39 is preferably performed for 512 columns, thus obtaining a linear feature signal P1(i) (i = 0, 1,..., 511) consisting of 512 pixels (step ST3). The feature data signal, P1(i) added by the adder 39 is stored in program memory 33 (step ST4).

Figure 3B shows an example of a feature signal P1(i). The feature signal P1(i) stored in program memory 33 is sequentially read out by control circuit 46. The feature signal is then stored in memory 17 of IC card 35 loaded by reader/writer 37 (step ST5).

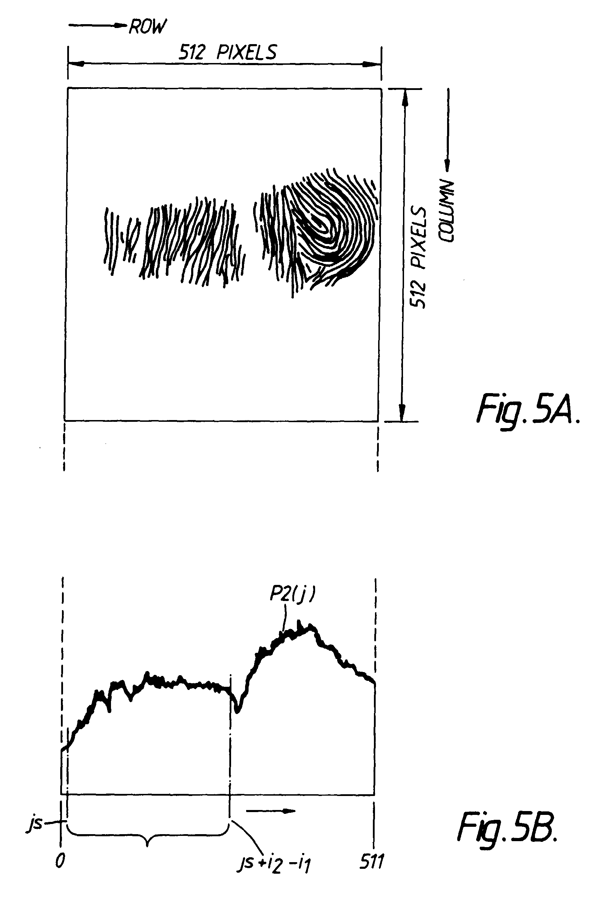

As described above, a case will be described with reference to Figure 4, wherein feature signal of a finger is collated after the feature signal of a finger of the card holder is stored in IC card as described above.

In the collation mode shown in Figure 4, steps ST1 to ST14 are the same as steps ST1 to ST4 in the registration operation shown in Figure 2. That is, camera 25 generates a finger image signal of a finger contacting the surface of prism 23 (ST11), the finger image signal is converted into digital signals by A/D converter 29 (ST12), and the feature signals are extracted from the digital finger-image signals (ST13) as described above, thus generating feature signal P2(j) j = 0, 1,..., 511). The generated feature signal P2(j) is stored in program memory 33 (ST14).

After storing the feature signals P2(j), the feature signal P2(j) is verified with the feature signal P1(j) generated in the registration or input mode (ST15) as described later. The result of verifying the feature signal P2(j) is supplied to driver 47 to do entrance/exit processing (ST16).

Figure 5A shows a finger image sensed by camera 27 in the collation mode. Figure 5B shows the feature signal P2(j) j = 0, 1,..., 511) generated by adder 39 and stored in program memory 33.

The feature signal P2(j) stored in program memory 33 is collated with the feature signal P1(i) stored in memory 17 of IC card 35. In this collation operation, distances between data within the range of:

$$i1 \le i \le i2$$

$$(i1, i2 = 0, 1,..., 511, i1\ i2)$$

is obtained by removing two end portions of the feature signal P1(i), as shown in Figure 3B, and signals within the range of:

$$js \le j \le js+i2-i1$$

$$(js = 0,1,..., 510)$$

in the feature signal P2(j) shown in Figure 5B are calculated. This collation operation is performed for the entire range of feature signal P2(j) while shifting the value js with respect to the feature signal P2(j) element by element so as to determine whether or not the collating result is equal to or smaller than a predetermined value.

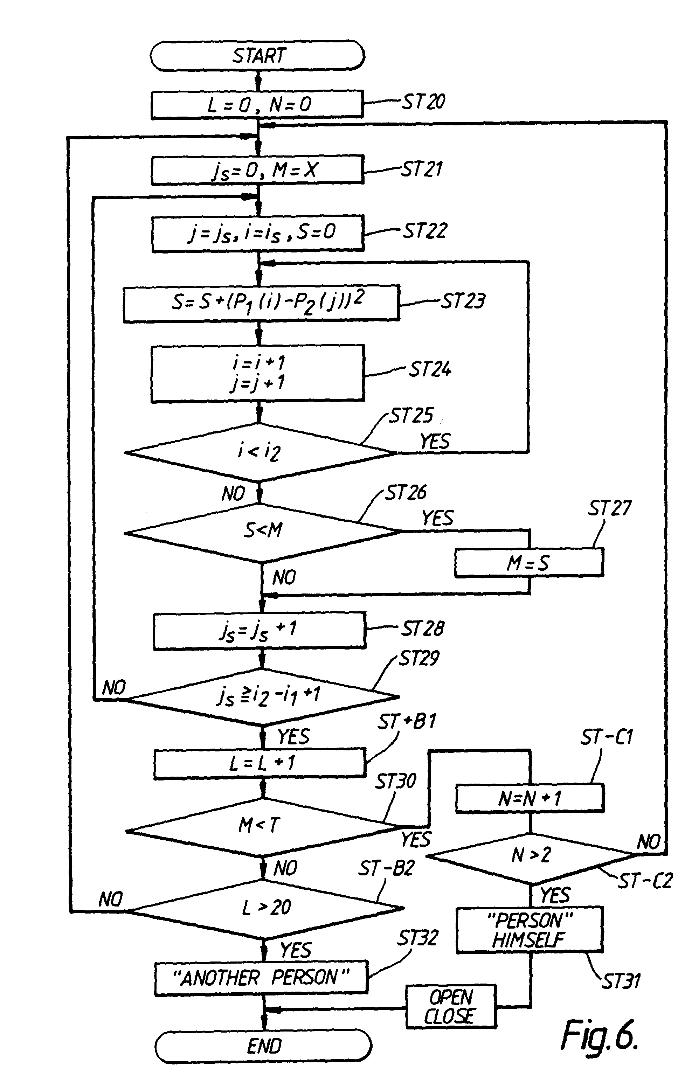

Figure 6 shows a main operation of the collation mode, e.g., detail of step ST15.

First, pointers L, N, js, j and i, and storage areas M and S are initialized, i.e., set to predetermined numbers, e.g., zero (steps ST20, ST21, and ST22). Storage area M is set equal to X, a value sufficiently larger than a threshold value T (to be described later) (steps ST20 and ST21). Squares of differences between corresponding elements of P1(i) and P2(j) for values of i in the range of i1 to i2 are calculated for each element of the feature signal, and a total sum of the calculated values is stored as a distance between P1(i) and P2(j) in the storage area S (steps ST22 to ST25). This distance relates to the amount of correlation between the two signals. If, in step ST25, pointer i fails to exceed i2, the operation in step ST23 is executed again. If pointer i is equal or exceeds i2, the calculation of the distance in the range of i1 to i2 is completed. After the distance in the range of i1 to i2 is calculated, if the distance stored in the storage area S is smaller than the content of the storage area M, the content of storage area M is rewritten with the calculated distance (step ST26 and ST27). If the distance stored in storage area S is equal to or exceeds the content of storage area M, the content of storage area M is not changed.

Thereafter, it is determined if the above operation is completed for the entire range of P2(j) (steps ST28 and ST29). In step ST29, in pointer js is smaller than (i2-i1+1), the operation shown in steps ST22 to ST29 is repeated. If it is completed, the content of the storage area M is compared with the predetermined threshold value T (step ST30). The storage area M stores a minimum value of the calculated distances. When the minimum value is smaller than the predetermined threshold value T, it is determined that the finger feature signal stored in memory 17 of IC card 35 coincides with the finger feature signal data read by camera 27, thus identifying the person to be the "person himself" (step ST31). If the minimum value is larger than the threshold value T, it Is determined that the finger feature signal stored in memory 17 of IC card 35 fails to coincide with the finger feature signal read by camera 27, thus identifying the person to be "another person" other than the person whose fingerprint is stored in memory 17 of IC card 35 (step ST32).

In this manner, when the person is identified to be the "person himself", the door 21 is opened by the driver 47 which is driven in accordance with instructions supplied from the output section 45, thus permitting entrance/exit. If the person is identified to be "another person", entrance/exit is rejected (step ST16 in Figure 4).

In the above steps, if an input image generated by camera 27 is bad, the collation operation lacks correctness. A "bad" image means an image that fails to correctly express the pattern of the object, e.g., the fingerprint. According to the present embodiment, the determination in ST30 is repeated. That is, pointer L is introduced to repeat the determination in ST30. Pointer L is incremented by one (step ST-B1) between steps ST29 and ST30. If the minimum value M is larger than the threshold value T, it is determined whether pointer L exceeds a predetermined number, e.g., twenty (20) (step ST-B2). If pointer L fails to exceed the predetermined number, the steps from step ST-21 are repeated. That is, pointer L indicates the number of repetitions of steps ST21 to ST30.

If the minimum value of the calculated distances is larger than the threshold T even though steps ST21 to ST30 are repeated a plurality of times, the collation operation may still provide an incorrect result.

Since it is possible that the minimum value may be incorrectly determined to be smaller than the threshold value T, according to the present embodiment, the determination of step ST30 is repeated. That is, when the minimum value is smaller than the threshold value T, steps ST21 to ST30 are repeated by introducing pointer N.

After M is determined to be smaller than T in step ST30, pointer N is incremented by 1 (ST-C1). Then, it is determined whether or not pointer N is larger than a second predetermined number, e.g. two (2) (ST-C2). If pointer N is smaller than three (3), steps ST21 to ST30 are repeated. If pointer N is larger than two, the person, i.e., card holder, is identified as the person corresponding to the person whose fingerprint data is contained on the IC card 35. A correct identification is more likely due to the plurality of coincidences between the data in memory 17 and the data sensed by camera 27.

Thus invention can very rapidly identify the person to be the "person himself". This is because the number of repetitions of coincidental determinations, (e.g., two times) is less than non-coincidental determinations, e.g., twenty times. Furthermore the person is identified more correctly as the "person himself" since coincidence takes place not one time, but a plurality of times.

According to the above embodiment, digital finger-image signals are added in a direction perpendicular to the longitudinal direction of a finger to obtain feature data. The feature data is collated with feature data prestored in the memory 17 of the IC card 35 by a similar method. Therefore, since a collation is made using data corresponding to a joint of a finger and data other than the "joint data", collation accuracy can be improved as compared to a case wherein a collation is performed using only an inter-joint length as in a conventional apparatus.

Since the distal end position of a finger need not be accurately detected, a device for detecting the distal end position of a finger need not be arranged, and the arrangement of the apparatus can be rendered compact.

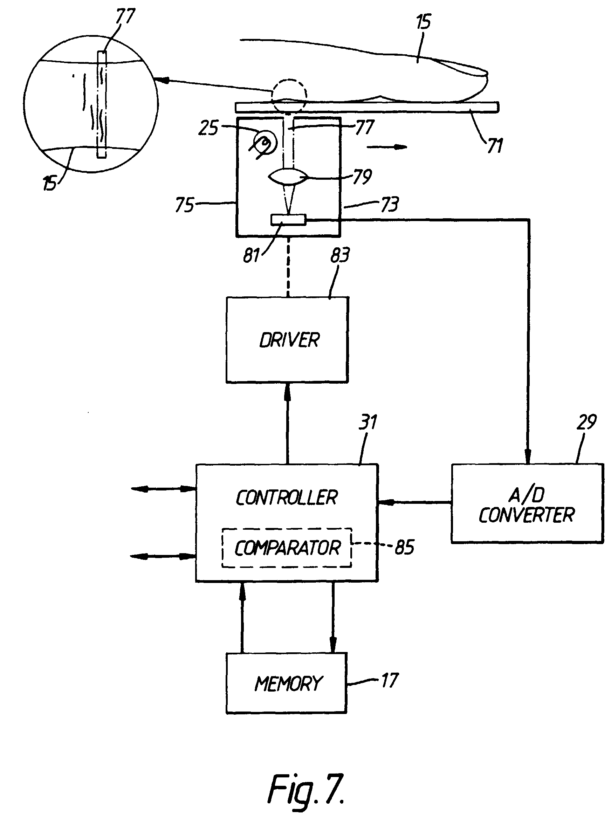

Figure 7 shows another embodiment of the present invention. The same reference numerals in Figure 7 denote the same parts as in Figure 1.

In Figure 7, finger 15 is brought into contact with a transparent glass 71. A reader 73 is arranged under the lower surface of glass 71. Reader 73 has a housing 75. A slit 77 is formed in a surface of housing 75 opposing glass 71. Slit 77 has a sufficiently narrow width W, for example 0.1 mm, and has a length L larger than the width of finger 15. A light source 25, a focusing lens 79, and a light-receiving element 81 are arranged in housing 75. Light source 25 illuminates finger 15 through slit 77. Light reflected by finger 15 is incident into housing 15 through slit 77, and the incident light is focused on light-receiving element 81 by lens 79. Therefore, light-receiving element 81 outputs an electrical signal corresponding to a total sum of light from the surface of finger 15 corresponding to slit 77.

A driver 83 is electrically connected to controller 31, and is mechanically connected to housing 75. Driver 83 moves housing 75 along the longitudinal direction of finger 15 in accordance with an instruction output from controller 31. Therefore, upon movement of the reader 73, light-receiving element 81 outputs an electrical signal corresponding to the light reflected by finger 15, as shown in Figures 3b and 5b. The output signal from light-receiving element 81 is supplied to A/D converter 29, and is converted to a digital signal. The digital signal output from A/D converter 29 is sequentially stored in a memory 33 through controller 31. Finger feature data stored in the memory 33 is stored in memory 17 of IC card 35. The feature signal stored in memory 17 is compared by comparator 85 with a finger image separately read by reader 73, thus identifying the person in the same manner as in the above embodiment.

In the embodiment shown in Figure 7, the electrical signal output from the light-receiving element 81 corresponds to a total sum of light reflected by the surface of finger 15 corresponding to slit 77. Therefore, controller 31 need not include an adder as shown in Figure 1. This embodiment can provide the same effect as the Figure 1 embodiment.

Obviously, numerous additional modifications and variation of the present invention are possible in light of the above teachings.

For example, the finger may be located on a glass instead of prism 23. Generating devices, which generating signals or data in response to light reflected by the object, may be replaced with CCD camera 27.

Any memory may be replaced with IC card 35.

## Claims

1. An image processing apparatus for fingerprint identification comprising

means for reading a fingerprint and generating a first set of pattern data identifying the fingerprint;
means for transforming the first set of pattern data generated by the generating means into a smaller, transformed first set of data P2(j) to represent the characteristics of the fingerprint;
storage means for storing a reference set of data PI(i) corresponding to a reference fingerprint;
means adapted for collating the set of reference fingerprint data with the smaller, transformed first set of data P2(j) to determine whether they match;

said apparatus further comprising

means adapted for successively repeating the reading of the fingerprint, and generating corresponding successive sets of pattern data; transforming each successive set of data into a smaller, transformed set, and collating each transformed set of data with the reference data; and
means for generating a coincidence signal in the event of a match between at least two successive transformed sets and the reference set.

2. Apparatus according to claim 1, wherein said reading means includes a window on which the object is located;

light means for illuminating the object through said window; and
receiving means for generating a signal in accordance with light reflected by the object.

3. Apparatus according to claim 1 or claim 2 further comprising:
means for counting the number of cycles of collation of the data generated in accordance with the object with the reference data.

4. A method for fingerprint identification, comprising the steps of

repeatedly reading a fingerprint and generating corresponding successive sets of pattern data identifying the fingerprint;
transforming each set of pattern data into a smaller, transformed set of data P2(j) to represent the characteristics of the fingerprint;
collating each transformed set of data with a stored set of reference data P1(i) to determine whether they match; and
generating a coincidence signal in the event of a match between at least two successive sets of transformed data, and the reference data.

5. The method of claim 4, wherein said output step includes a non-coincidence signal output step for generating a non-coincidence signal indicating that the data generated in said generation step is different from the registered data when the number counted in said counting step is above a predetermined number without coincidence being detected.

6. The method of claim 4, further comprising a step of storing the registered data in memory before the generating step.

## Patentansprüche

1. Bildverarbeitungsvorrichtung zur Fingerabdruck-Identifikation, mit:

einer Einrichtung zum Lesen eines Fingerabdrucks und zum Erzeugen eines ersten Musterdatensatzes, durch den der Fingerabdruck identifiziert wird;
einer Einrichtung zum Umwandeln des ersten Musterdatensatzes, der durch die Erzeugungseinrichtung erzeugt wurde, in einen kleineren umgewandelten ersten Datensatz P2(j), um die Eigenschaften des Fingerabdrucks darzustellen;
einer Speichereinrichtung zum Speichern eines Referenzdatensatzes PI(i), der einem Referenz-Fingerabdruck entspricht;
einer Einrichtung, die dazu ausgestaltet ist, den Referenz-Fingerabdruckdatensatz mit dem kleineren umgewandelten ersten Datensatz P2(j) zu vergleichen, um zu bestimmen, ob sie übereinstimmen;

wobei die Vorrichtung außerdem aufweist:

eine Einrichtung, die dazu ausgestaltet ist, um nacheinander das Lesen des Fingerabdrucks und das Erzeugen von entsprechenden aufeinanderfolgenden Musterdatensätzen zu wiederholen; um jeden aufeinanderfolgenden Datensatz in einen kleineren umgewandelten Satz umzuwandeln und um jeden umgewandelten Datensatz mit den Referenzdaten zu vergleichen; und

eine Einrichtung zum Erzeugen eines Übereinstimmungssignals für den Fall einer Übereinstimmung zwischen zumindest zwei aufeinanderfolgenden umgewandelten Sätzen und dem Referenzsatz.

2. Vorrichtung nach Anspruch 1, bei dem die Leseeinrichtung ein Fenster, auf dem der Gegenstand angeordnet ist;

eine Beleuchtungseinrichtung, um den Gegenstand durch das Fenster zu beleuchten; und
eine Empfangseinrichtung aufweist, um entsprechend dem vom Gegenstand reflektierten Licht ein Signal zu erzeugen.

3. Vorrichtung nach Anspruch 1 oder Anspruch 2, die außerdem aufweist:
eine Einrichtung, um die Zahl von Vergleichszyklen zwischen den entsprechend dem Gegenstand erzeugten Daten und den Referenzdaten zu zählen.

4. Verfahren zur Fingerabdruck-Identifikation, mit den Schritten:

wiederholtes Lesen eines Fingerabdruckes und Erzeugen von entsprechenden aufeinanderfolgenden Musterdatensätzen, durch die der Fingerabdruck identifiziert wird;
Umwandeln jedes Musterdatensatzes in einen kleineren umgewandelten Datensatz P2(j), durch den die Eigenschaften des Fingerabdrucks dargestellt sind;
Vergleichen jedes umgewandelten Datensatzes mit einem gespeicherten Referenzdatensatz P1(i), um zu bestimmen, ob sie übereinstimmen; und
Erzeugen eines Übereinstimmungssignals für den Fall einer Übereinstimmung zwischen zumindest zwei aufeinanderfolgenden Sätzen von umgewandelten Daten und den Referenzdaten.

5. Verfahren nach Anspruch 4, bei dem der Ausgabeschritt einen Nichtübereinstimmungssignal-Ausgabeschritt zum Erzeugen eines Nichtübereinstimmungssignals umfaßt, das anzeigt, daß die in dem Erzeugungsschritt erzeugten Daten verschieden sind von den registrierten Daten, wenn die im Zählschritt gezählte Zahl eine vorbestimmte Zahl übersteigt, ohne daß eine Übereinstimmung erfaßt wird.

6. Verfahren nach Anspruch 4, das außerdem vor dem Erzeugungsschritt einen Schritt umfaßt, in dem die registrierten Daten in einem Speicher gespeichert werden.

**Revendications**

1. Appareil de traitement d'images pour identifier des empreintes digitales comprenant

des moyens pour lire une empreinte digitale et pour générer un premier ensemble de données de modèle identifiant l'empreinte digitale ;
des moyens pour transformer le premier ensemble de données de modèle généré par les moyens de génération en un premier ensemble de données transformé plus petit P2(j) pour représenter les caractéristiques de l'empreinte digitale ;
des moyens de stockage pour stocker un ensemble de référence de données P1(i) correspondant à une empreinte digitale de référence ;
des moyens adaptés pour collationner l'ensemble de données d'empreintes digitales de référence avec le premier ensemble de données transformé plus petit P2(j) pour déterminer s'ils correspondent ;

ledit appareil comprenant en outre

des moyens adaptés pour répéter successivement la lecture de l'empreinte digitale, et pour générer des ensembles successifs correspondants de données de modèle ; pour transformer chaque ensemble successif de données en un ensemble transformé, plus petit, et pour collationner chaque ensemble de données transformé avec les données de référence ; et
des moyens pour générer un signal de coincidence en cas de correspondance entre au moins deux ensembles transformés successifs et l'ensemble de référence.

2. Appareil selon la revendication 1, dans lequel lesdits moyens de lecture incluent une fenêtre sur laquelle est situé l'objet ;

des moyens d'éclairage pour éclairer l'objet à travers ladite fenêtre ; et
des moyens de réception pour générer un signal conformément à lumière réfléchie par l'objet.

3. Appareil selon la revendication 1 ou la revendication 2, comprenant en outre :
des moyens pour compter le nombre de cycles de collationnement des données générées conformément à l'objet avec les données de référence.

4. Procédé pour identifier des empreintes digitales, comprenant les étapes consistant à

lire de façon répétée une empreinte digitale et générer des ensembles successifs correspondants de données de modèle identifiant l'empreinte digitale ;

transformer chaque ensemble de données de modèle en un ensemble de données transformé plus petit P2(j) pour représenter les caractéristiques de l'empreinte digitale ;

collationner chaque ensemble de données transformé avec un ensemble stocké de données de référence P1(i) pour déterminer s'ils correspondent ; et

générer un signal de coïncidence en cas de correspondance entre au moins deux ensembles successifs de données transformées, et les données de référence.

5. Procédé selon la revendication 4, dans lequel ladite étape de sortie inclut une étape de sortie d'un signal de non-coïncidence pour générer un signal de non-coïncidence indiquant que les données générées à ladite étape de génération sont différentes des données de correspondance quand le nombre compté à ladite étape de comptage dépasse un nombre prédéterminé sans qu'une coïncidence soit détectée.

6. Procédé selon la revendication 4, comprenant en outre une étape consistant à stocker les données enregistrées en mémoire avant l'étape de génération.

Fig.1.

START

ST1 — FINGER IMAGE INPUT

ST2 — A/D CONVERSION

ST3 — FEATURE EXTRACTION

ST4 — STORE IN MEMORY

ST5 — STORE IN IC CARD

END

Fig.2.

START

ST11 — FINGER IMAGE INPUT

ST12 — A/D CONVERSION

ST13 — FEATURE EXTRACTION

ST14 — STORE IN MEMORY

ST15 — VERIFICATION

ST16 — ENTRANCE/EXIT PROCESSING

END

Fig.4.

Fig.3A.

Fig.3B.

Fig.5A.

Fig.5B.

START

$L = 0, N = 0$ — ST20

$j_S = 0, M = X$ — ST21

$j = j_S, i = i_S, S = 0$ — ST22

$S = S + (P_1(i) - P_2(j))^2$ — ST23

$i = i + 1$
$j = j + 1$ — ST24

ST25
$i < i_2$ — YES

NO

ST26
$S < M$ — YES

ST27
$M = S$

NO

$j_S = j_S + 1$ — ST28

ST29
$j_S \geqq i_2 - i_1 + 1$ — NO

YES ST+B1
$L = L + 1$

ST-C1
$N = N + 1$

ST30
$M < T$ — YES

$N > 2$ — NO

NO ST-C2

ST-B2 YES
$L > 20$ — NO "PERSON" HIMSELF

YES ST32 ST31

"ANOTHER PERSON"

OPEN CLOSE

END

Fig.6.

Fig.7.